Europäisches Patentamt

European Patent Office

Office européen des brevets

(19)

(11) EP 0 421 750 B1

(12) **EUROPEAN PATENT SPECIFICATION**

(45) Date of publication and mention
of the grant of the patent:
**27.12.1996 Bulletin 1996/52**

(51) Int Cl.6: **H04N 17/04, H01J 9/44**

(21) Application number: **90310808.2**

(22) Date of filing: **03.10.1990**

(54) **Convergence measurement apparatus for colour cathode ray tubes**

Konvergenzmessvorrichtung für eine Farbkathodenstrahlröhre

Appareil de mesure de convergence pour un tube à rayons cathodiques couleur

(84) Designated Contracting States:
**DE ES FR GB**

(30) Priority: **03.10.1989 JP 258283/89**
**03.10.1989 JP 258284/89**

(43) Date of publication of application:
**10.04.1991 Bulletin 1991/15**

(73) Proprietor: **SONY CORPORATION**
**Tokyo 141 (JP)**

(72) Inventors:
• **Ichigaya, Hiroshi, c/o Patents Division**
**Shinagawa-ku, Tokyo 141 (JP)**
• **Sato, Satoshi, c/o Patents Division**
**Shinagawa-ku, Tokyo 141 (JP)**

(74) Representative: **Pilch, Adam John Michael et al**
**D. YOUNG & CO.,**
**21 New Fetter Lane**
**London EC4A 1DA (GB)**

(56) References cited:
**EP-A- 0 238 036**      **EP-A- 0 247 627**
**EP-A- 0 280 302**

• **PATENT ABSTRACTS OF JAPAN vol. 14, no. 413**
**(E-974) 06 September 1990, & JP-A- 02 156792**
**(SONY) 15 June 1990,**
• **PATENT ABSTRACTS OF JAPAN vol. 8, no. 84**
**(E-239)(1521) 18 April 1984, & JP-A-59 004383**
**(FUJITSU) 11 January 1984**

## Description

This invention relates to convergence measurement apparatus for colour cathode ray tubes such as are used in television receivers or the like.

As is well known, in colour cathode ray tubes (CRTs), uniform convergence of primary colours in the CRT is desirable to provide a high quality image display. One aspect of quality control in the manufacture of CRTs is convergence measurement.

Previously proposed convergence measuring apparatus is exemplified by a phase detection type convergence measuring device such as that disclosed in the present applicants' Japanese Patent Application JP-A-63310670. In this prior proposed apparatus, a pattern generator supplies image signals to a colour CRT to be measured. The pattern generator produces image signals by which a luminescent line (horizontal or vertical) of a primary colour is shifted on one of the domains of the viewing area of the CRT with a white area being cast on another domain. An image sensor having a single humped or peak directional sensitivity characteristic is positioned on the face of the CRT.

With this arrangement, the light sensor is positioned at an arbitrary position on the viewing screen of the CRT and a luminescent line of each primary colour is cast on the viewing screen by the pattern generator. A computer then creates an envelope curve for each of the primary colours in accordance with a detection output, corresponding to each of the primary colours, from the light sensor so as to obtain the position of the peak value of each envelope curve, and compares the positions of the peak values of the primary colours with each other so as to calculate a mis-convergence value. Further, the position of the light sensor is changed on the viewing screen of the CRT so that the measurement is carried out at several positions thereon.

The reason for providing a white domain during the above-described measurement is that, if only the respective luminescent lines of green, red and blue were to be cast on the viewing screen, the beam current of the CRT would change, causing high-voltage variation. Such variation causes a positional shift of an electronic peak for each colour, and accordingly the white domain is provided to stabilise high voltage variations.

However, a number of problems exist with this system of measurement. First of all, even though the white domain is provided as mentioned above, since the current value of a luminescent line of the presently displayed colour is greater than that of the other colours, the current values of the primary colour beams vary each time the colour of the luminescent line is changed. High voltage variations caused by the change in current value, by way of a voltage drop, cause a positional shift of the luminescent line which gives rise to measurement error.

In order to prevent the above occurrence, it is generally understood that the width of the displayed primary colour lines can be reduced to minimise the difference between the current values of the colours. But, if the width of the luminescent line is narrowed, disadvantages such as deterioration of the signal to noise (S/N) ratio or the like would occur. Accordingly this is not a viable way of solving the problem.

Further, with the above-described type of measuring apparatus, although the convergence condition of a colour CRT can easily be measured, unless the measuring apparatus itself is operating properly, precise measurement results cannot, of course, be expected. Thus, checking has typically been done by using a 'control' CRT or a dummy signal generator. The former case involves the use of a colour CRT prepared so as to have a known mis-convergence value. This known data is then compared with measurement data in order to check the measurement apparatus. In the latter case, a dummy signal simulating a known luminescence of a colour CRT is generated from the dummy signal generator, and the dummy signal is used in place of an output from the light sensor to be supplied to the measuring apparatus so as to check its accuracy.

The drawbacks of these methods are that they both require the use of bulky extra equipment, such as a standard CRT or a dummy signal generator. As a result, such checking is difficult to implement readily during the use of the measuring equipment.

European Patent Application EP-A-0 247 627 discloses a misconvergence measurement apparatus having a pattern generator for generating a cross-hatch pattern on the display screen being tested. Light sensing means provides a signal representative of light on the display screen. Mis-convergence is measured on the basis of the signal from the light sensing means, by setting a first window in which baricentres of the cross-hatch pattern are measured for displacement in respect of different colours.

According to the present invention there is provided a convergence measurement apparatus for a colour cathode ray tube having a display screen, the apparatus comprising:

pattern generating means for generating a pattern signal for display on the display screen of the cathode ray tube;
light sensing means having a single peaked directional response for supplying a signal representative of input light received from the display screen; and
mis-convergence calculating means supplied with the signal from the light sensing means, for calculating a mis-convergence value;

characterised in that:

the pattern generating means is operable to generate a pattern which includes a measuring area of a bar pattern of a selectable colour and a plane area of at least two colours not including the colour of the bar pattern;

measuring means is supplied with the output signal of the light sensing means for measuring the intensity of the light received by the light sensing means and providing corresponding light intensity data;

memory means is provided for storing the light intensity data for a plurality of colours received by the light sensing means;

the mis-convergence calculating means is operable to calculate a modulation degree and a mis-convergence value based on the light intensity data for the plurality of colours, and includes setting means for setting the position of the bar pattern and the plane area on the display screen such that, when the modulation degree of the light received by the light sensing means is below a first predetermined value or above a second predetermined value, the setting means is operable to adjust the line interval of the bar patterns so as to bring the modulation degree within a range between the first and second predetermined values; and

display means is provided for displaying the mis-convergence value determined by the mis-convergence calculating means.

A preferred embodiment of the invention provides a convergence measurement apparatus which can prevent variations between the current values of primary colours caused by variations in high voltage, so as to eliminate errors in measurement.

In the preferred convergence measuring apparatus, checking can be performed smoothly without disruption or use of extra equipment.

The invention will now be described by way of example with reference to the accompanying drawings, throughout which like parts are referred to by like references, and in which:

Figure 1 is a block diagram of a convergence measurement apparatus according to an embodiment of the present invention;

Figure 2 is a perspective view of the apparatus of Figure 1 together with a CRT colour monitor under test;

Figure 3 is a horizontal sectional view of a portion of a CRT screen, and shows the placement of a light sensor on the face of a colour CRT according to a preferred embodiment of the present invention;

Figure 4 is a graph showing the light sensitivity characteristic of the light sensor shown in Figure 3;

Figure 5 shows an envelope curve interpolated from discrete light intensity data according to the processing executed according to the embodiment of the present invention;

Figure 6 shows an envelope curve as shown in Figure 5 wherein a peak position has been determined;

Figure 7 shows an image displayed on the display screen of a colour CRT for carrying out measurement according to the preferred embodiment of the present invention;

Figure 8 indicates a degree of shift of a plurality of luminescent lines of a primary colour displayed by a pattern generator embodying the present invention;

Figures 9 and 10 show respectively light intensity data (envelope curve) for a minimum optimum modulation level and a maximum optimum modulation level for measurement according to an embodiment of the invention;

Figure 11 is a flow chart showing the processing steps for self-inspecting convergence measurement according to an embodiment of the invention;

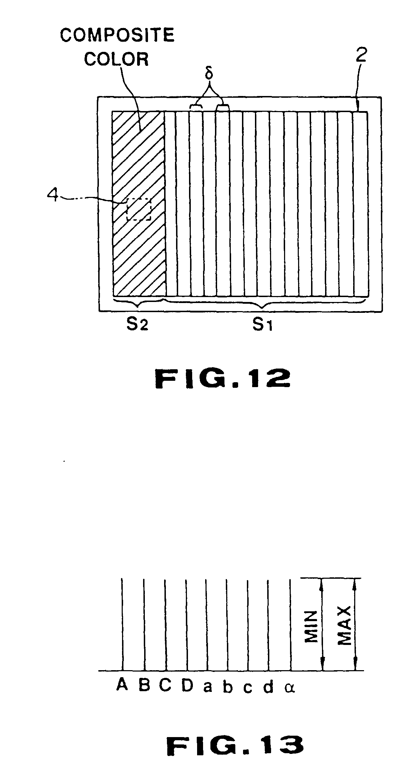

Figure 12 shows a display generated by a pattern generator embodying the invention arranged opposite the pattern of Figure 7 wherein the light sensor is placed on a domain not to be measured;

Figure 13 shows change-over frame intervals of a colcur CRT;

Figure 14 is a flow chart showing a sub-routine of a "no measurement area changing program" step in the flow chart of Figure 11; and

Figure 15 is a flow chart showing a sub-routine of a "line interval control program" step in the flow chart of Figure 11.

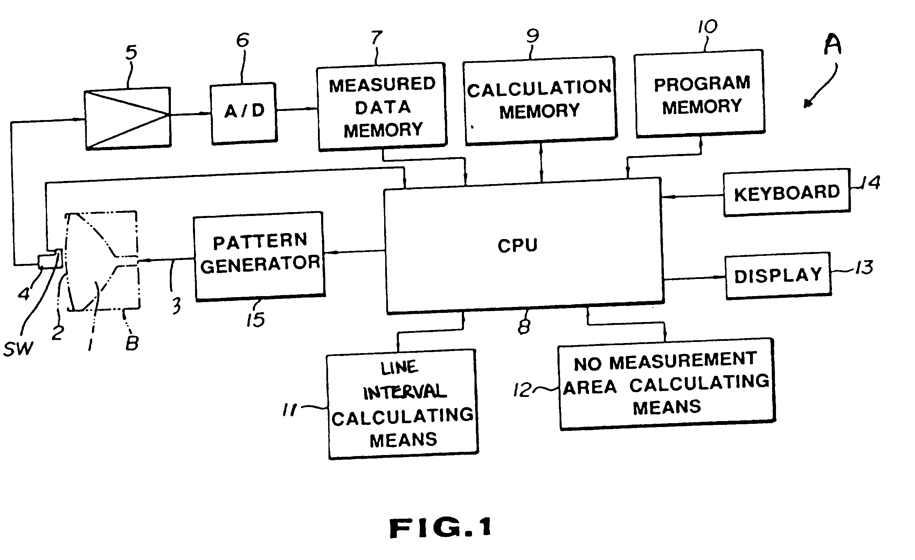

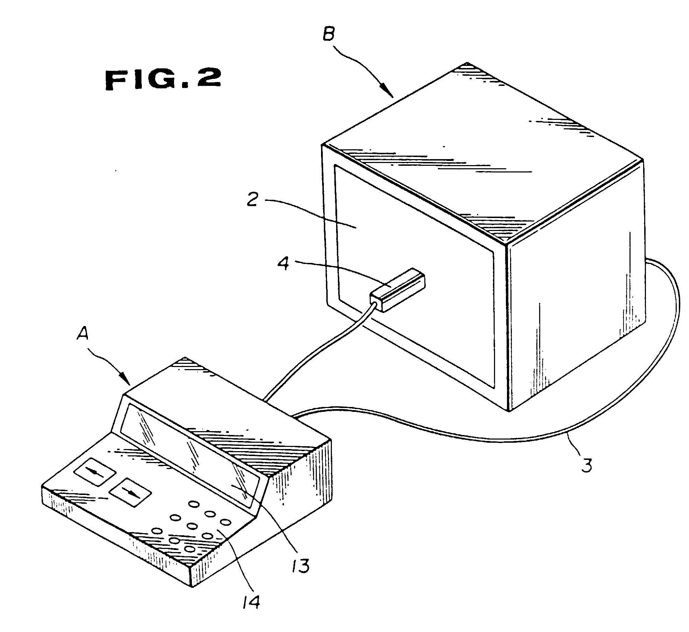

Figure 2 shows a convergence measuring apparatus A arranged in a measuring condition. Referring to Figures 1 and 2, a television receiver B incorporates a colour CRT 1 to be measured. A display screen 2 of the CRT 1 is exposed at the front and a signal cable 3 from the convergence measuring apparatus A is connected to image signal input terminals on the television receiver B such that image signals from the convergence measuring apparatus A are displayed on the CRT 1.

Further, the convergence measuring apparatus A includes a light sensor 4 which is connected to the remainder of the apparatus by a cable, and which is arranged in contact with the display screen 2 so as to receive light therefrom.

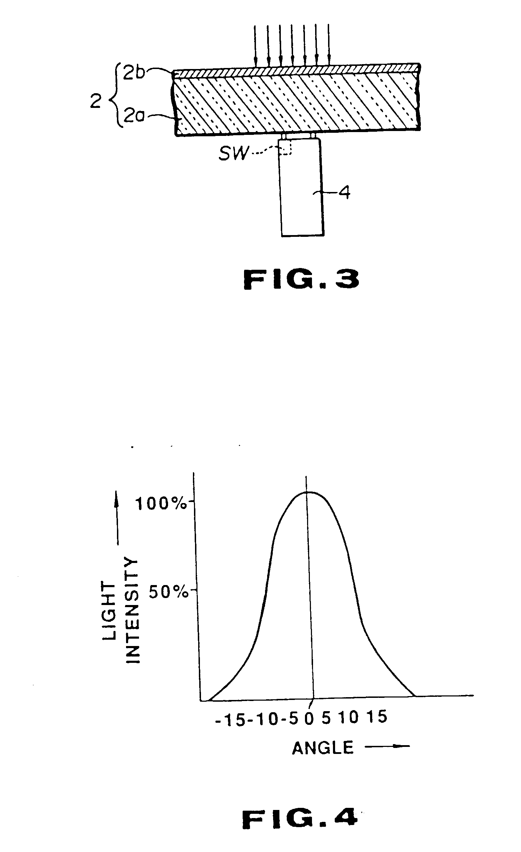

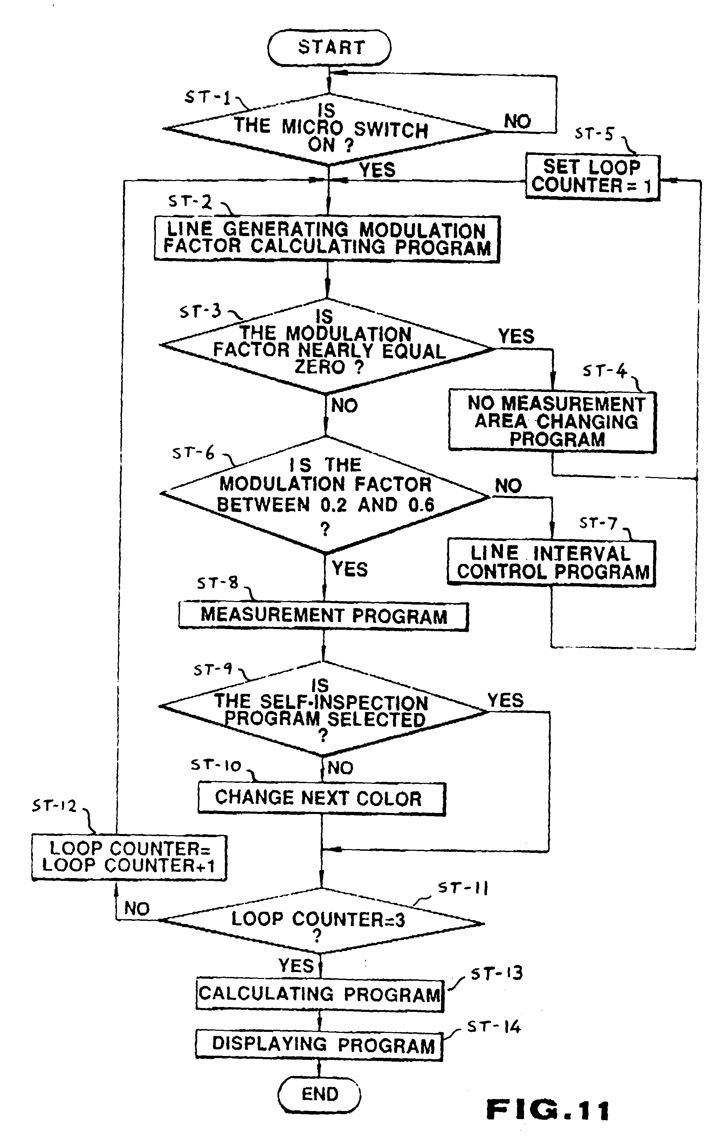

Figure 3 shows a cross-sectional view illustrating the positional relationship between the display screen 2 and the light sensor 4. Referring to Figure 3, the display screen 2 has a glass panel 2a having an inner surface on which a phosphor layer 2b is deposited. The phosphor layer 2b luminesces when an electron beam is irradiated thereon. Furthermore a microswitch SW is provided in the light sensor 4 such that, when the light sensor 4 contacts the display screen 2, the microswitch SW in set to ON. An ON signal from the microswitch SW initiates the measurement routine which runs in accordance with the flow chart of Figure 11, as will be explained later.

Figure 4 shows the directional sensitivity characteristic of the light sensor 4. The angle (degree) of light incident upon the light sensor 4 from the display screen 2 of the CRT 1 is indicated on the axis of the abscissa and the strength of the intensity of the light incident upon the light sensor 4 at incident angles, that is, the relative light intensity, which has a value of 100% when the angle of incidence is zero, is shown on the ordinate axis. The larger the absolute value of the incident angle of the light, the smaller the light intensity becomes, which gives the light sensor 4 a so-called signal humped or peak characteristic, in which the light intensity becomes zero % when the absolute value of the incident angle is substantially 20 degrees.

Figure 1 is a view illustrating a circuit block diagram of the convergence measuring apparatus A. As seen in Figure 1, a detection output (light intensity data) of the light sensor 4 is supplied to an analog to digital (A/D) converter 6 by way of an amplifier 5, and is therefore consequently converted to a digital signal by the A/D converter 6. The digital light intensity data is then written into a measured data memory 7 in accordance with a write signal from a central processing unit (CPU) 8. The CPU 8 further controls the read-in and write-out of data from a computing or calculation memory 9 and a program memory 10. In the calculation memory 9, calculation data is stored which is required for several calculation processes. In the program memory 10, there is stored data for carrying out a measuring program, a modulation degree calculating program, a mis-convergence value calculation program, a self-inspection program and a display program. The contents of these programs will be explained according to the present embodiment.

The modulation degree calculating program lists a maximum value MAX and a minimum value MIN for light intensity data of a primary colour which is to be measured, and determines a modulation degree F according to the following equation:

$$F = (MAX - MIN) / (MAX + MIN) \qquad (1)$$

A value is determined to be an appropriate value if this modulation degree F falls in a range of 0.2 to 0.6, and is determined to be inappropriate outside this range. If the modulation degree F is determined to be inappropriate, the modulation degree data is transferred to a line interval calculating means 11, which will be described later. Further, if the modulation degree is substantially zero (0), a change instruction is forwarded to a no measurement area calculating means 12. It is to be noted that the modulation degree calculation program determines the modulation degree from the difference between the maximum value and the minimum value in light intensity according to the present embodiment; however, the modulation degree can also be determined by the condition of an envelope curve of light intensity data (for example a difference between a maximum and minimum value of a curve or inclination angle).

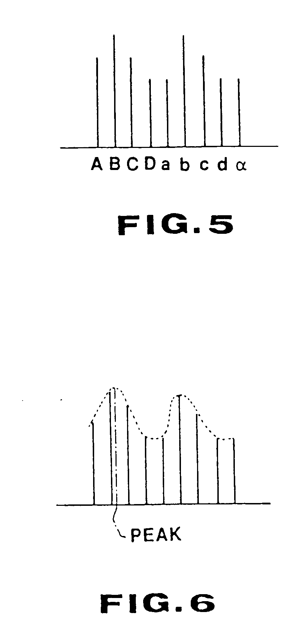

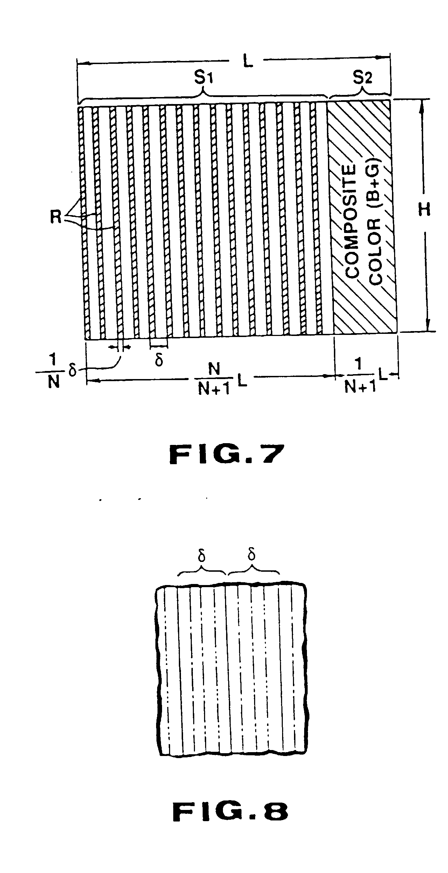

The mis-convergence value calculating program interpolates discrete light intensity data (shown in Figure 5) read from the measured data memory 7 so as to convert the data into light intensity data (an envelope curve) which varies finely as shown by the broken line in Figure 6 and therefore detects a time point (position) at which a peak value of the light intensity data of each of the primary colours can be obtained. Then the difference is found between the time point at which the peak value of the light intensity of, for example, green, is obtained, and the time point at which the peak value of the light intensity of red or blue is obtained, that is, a mis-convergence value is calculated.

The CPU 8 drives and controls the line interval calculating means 11, as well as the no measurement area calculating means 12 and a display section 13. The line interval calculating means 11 causes the CPU 8 to supply luminescent line interval data in accordance with the modulation degree. The no measurement area calculating means 12 designates a domain $S_2$ (Figure 7) not to be measured, that is, it sets either one of a right portion or a left portion of the display screen 2 as the domain $S_2$ according to this embodiment. When the CPU 8 provides an instruction for changing the domain not to be measured, the domain not to be measured is changed from the current portion to the other one. As will be explained below, the portion is one quarter of the display screen 2 in the present embodiment.

It is to be noted that the display section 13 displays a mis-convergence value or the like and a modulation degree in order to facilitate manual correction of the intervals of the luminescent lines if no line interval calculating section is incorporated.

The self-inspection program run by the CPU 8 controls a pattern generator 15, which will be described hereinbelow, and operates so as to allow the pattern generator 15 to supply patterns of luminescent lines all having the same colour such as red for example, and executes the measuring program, the computing program and the display program for each pattern, similar to the routine of measurement processing. That is to say, in this embodiment, an inspection mode signal is transmitted to the pattern generator 15, and the other process steps are carried out with the help of the existing programs. Accordingly, self-inspection can be accomplished with only slight deviation from the normal running routine.

Further, the CPU 8 can receive signals from a keyboard 14. The keyboard 14 can be used to update data in the calculation memory 9, the program memory 10 and the like. The keyboard may also incorporate a self-inspection key (not shown) which is selected for activating the self-inspection program. Also, if the luminescent line intervals are to be manually corrected, data can be entered on the keyboard 14 to effect such correction.

Data regarding the luminescent line intervals and the domain not to be measured are transmitted to the pattern generator 15 by way of the CPU 8. The pattern generator 15 produces an image signal for displaying an image as shown in Figure 7, and transmits the same to the colour CRT 1. That is to say, the display screen 2 is divided into the domain $S_2$ not to be measured, selected according to data from the no measurement area calculating means 12, and a domain $S_1$ to be measured, which is an area of the display 2 other than the formerly-mentioned domain $S_2$. In the domain $S_1$ a luminescent bar pattern is displayed in which a plurality of luminescent lines of red, green or blue are arranged at predetermined intervals $\delta$ and are shifted across the domain $S_1$ by intervals of one-Nth of $\delta$, where N is an integer greater than 2 (N = 4 in this embodiment).

Conversely, in the domain $S_2$, a composite of the two primary colours other than the primary colour currently being displayed as a bar pattern, is cast in a daubed, or mixed, condition. It will be noted that the total area of the plurality of luminescent lines in the domain $S_1$ is set substantially equal to the area of a picture image of each colour on the domain $S_2$. The picture image of a colour is the area of the display illuminated by an electron beam of that colour. The domain of the composite colour is the total picture image of the combined colours. Thus, if the value of the shift of the luminescent lines is set to one-Nth of the interval $\delta$, the areas of the domains $S_1$ and $S_2$ are set to N:1, and the proportion of the width of the luminescent lines to the intervals $\delta$ are set to 1/N. Accordingly each area is calculated according to the equation:

$$B = G = (1/(N + 1)) \cdot H, \quad R = (N/(N + 1)) \cdot H \qquad (2)$$

where H is the vertical height of the display screen and L is the horizontal width of the display screen.

Accordingly, all areas are substantially equal to each other. In the present embodiment, the ratio of the areas of the domains $S_1$ and $S_2$ is set to 4:1 since N = 4, and the proportion of the width of the luminescent line to the intervals of the luminescent lines are set to 1/4.

Further, as shown in Figure 8, in the above mentioned luminescent line pattern, the locations of the lines are shifted successively from the positions indicated by the solid lines to the positions indicated by the one-dot chain lines, the two-dot chain lines and three-dot chain lines, and these positional changes are repeated. When such lines are produced on the display screen 2, a detection output from the light sensor 4 gives discrete light intensity data having a characteristic such that the light intensity at the time points having intervals of change-over frames, that is, A, B, C, D, a, b, c, d, ... varies in the manner of an AC current.

Accordingly, the light sensor in can be located at an arbitrary position on the viewing screen 2 of the CRT 1 according to Figure 5 and, in principle, the period of measurement can be as short as a four frame period. Further the pattern generator 15 is capable of producing the luminescent lines either in a vertical direction, as shown in Figure 7, or in a horizontal direction.

An explanation will now be given of the operation of the above-described arrangement, with reference to the flow-chart shown in Figure 11.

At a decision step ST-1, when the light sensor 4 is brought into contact with the viewing screen 2 of the colour CRT 1 at an arbitrary position, the microswitch SW becomes ON and the CPU 8, which has until this point been repeating the decision step ST-1, activates the modulation degree calculating program at a step ST-2. That is to say, the line interval data from the line interval calculating means 11 and the domain not to be measured data from the no measurement area calculating means 12 are transmitted to the pattern generator 15 in response to a control signal from the CPU 8. The pattern generator 15 creates an image signal in accordance with these data and, as shown for example in Figure 7, luminescent lines of red are distributed over the domain $S_1$ while a combination colour composed of blue and green is cast over the domain $S_2$.

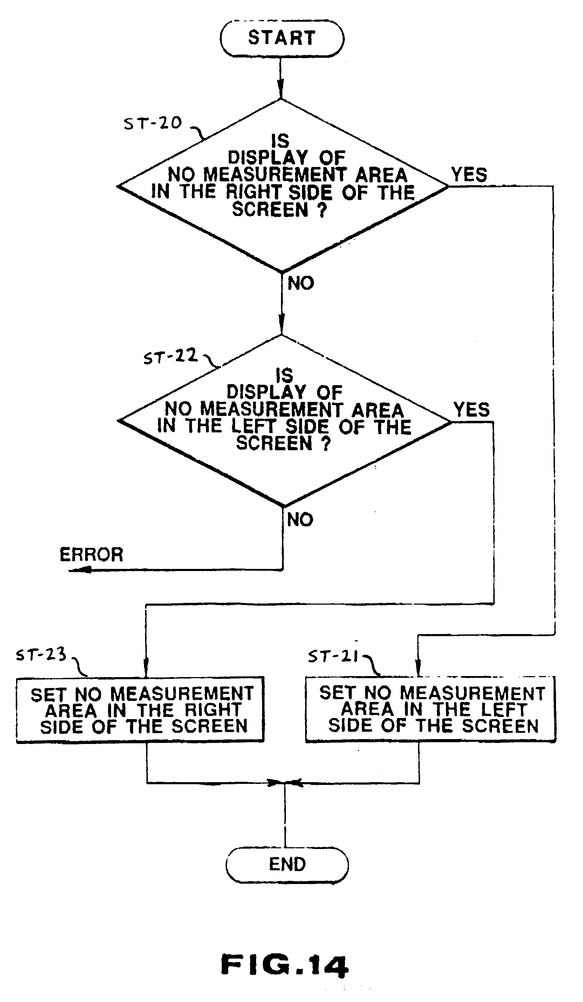

These luminescent lines are shifted on the screen for each frame and data of the light intensity for each shift (refer to Figure 5) are entered into the measured data memory 7. When the data of the light intensity of red is memorised, the modulation degree calculating program calculates the modulation degree according to the light intensity data. At a step ST-3, if it is determined by the CPU 8 that the modulation degree is zero or at least nearly zero, indicating that the light sensor is placed in the $S_2$ composite colcur area, the no measurement area calculating means 12 interrupts the operation at a step ST-4 to change the location of the domain $S_2$, thus also changing the location of the domain $S_1$ such that the luminescent lines are repositioned where they can be read by the light sensor is. It will be noted that with this arrangement, the light sensor 4 can be placed in any arbitrary position on the display screen 2 without fear of hindering the measurement process. It is to be understood that the no measurement area changing means 12 is constituted by the CPU 8 carrying out a suitable program, the details of which will be explained further herein with reference to Figure 14. After completion of the no measurement area changing program at the step ST-4, the CPU 8 proceeds to set a loop counter to "1" in a step ST-5 and then returns to the step ST-2.

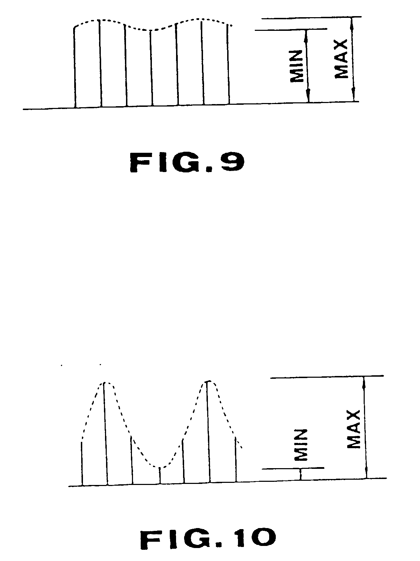

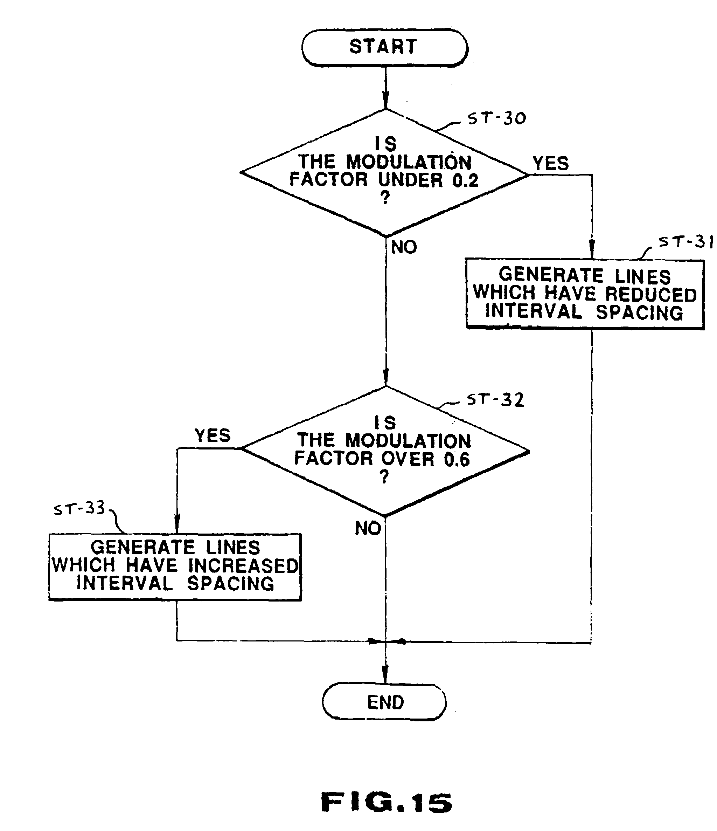

Assuming that the modulation factor F is not zero, as determined by the step ST-3, if the light sensor is placed on the domain area $S_1$ when the line interval $\delta$ is smaller than an optimum value, the light intensity data assumes a characteristic as shown in Figure 9, the modulation degree being less than 0.2. Conversely, if the interval $\delta$ of the lines is larger than an optimum value, the light intensity data assumes a characteristic as shown in Figure 10, the modulation degree being greater than 0.6. This determination is made by the CPU 8 at a step ST-6. In either case, namely if F is not within the range of 0.2 to 0.6, then the process flow is interrupted at a step ST-7 by the line interval calculating means 11, which is constituted by the CPU 8 carrying out a program, the details of which will be explained further with reference to Figure 15. In carrying out the line interval control program at the step ST-7, the modulation data calculated at the step ST-2 is used by the CPU 8 to calculate a suitable interval $\delta$ for the lines. The CPU 8 then proceeds to the step ST-5 and repeats the program steps ST-2, et seq. The new line spacing data is then transmitted to the pattern generator 15 to be implemented on the display screen 2.

Once the domain to be measured and the optimum modulation degree are established, the measurement program is executed at a step ST-8. In the measurement program, a single colour display of luminescent lines is cast on the domain $S_1$ and the light intensity data, as shown in Figure 5, is stored in the measured data memory 7 for each colour each time that the step ST-8 is repeated.

It is next determined at a step ST-9 whether the self-inspection program has been selected by the operator via the keyboard 14. If the answer is no, the program proceeds to a step ST-10 wherein the CPU 8 instructs the pattern generator 15 to select the next of the three primary colours for the bar display and to change the colours of the image on the no measurement area $S_2$ side of the screen. If the answer at the step ST-9 is yes, the CPU 8 proceeds directly to a step ST-11, causing a line pattern of one colour only (for example red) to be subjected to the measurement and mis-convergence calculation programs. The peak light intensity values of successive tests of the same colour are transferred to the display program for display by the display section 13. If system operation is normal, the peak values for each measurement cycle will be substantially identical. If a variation occurs in the peak values for successive measurement of a single colour, an abnormality of the system can be assumed.

According to the present embodiment, the line pattern used in the self-inspection program is identical to the one generally used in measurement processing; however, luminescent lines can alternatively be arranged at intervals of 1/8 of $\delta$, rather than 1/4, as this is considered the maximum detectable error and accordingly a very high degree of accuracy can be established when calibrating the system. It will be noted that red is used as the test colour for the self-inspection program and, although a different colour can be used, the afterglow intensity of red light after one field period (16.7 ms at 60 MHz) is the lowest for the phosphors generally used in television receivers. Accordingly, it is preferable to use a red pattern as in the present embodiment since it is possible to prevent inspection results from being affected by afterglow and allows a finer resolution line pattern to be used for calibration. However, any colour whose afterglow period is low enough to allow a desired accuracy of testing can be used.

After the steps ST-9 or ST-10, the CPU 8 checks at the step ST-11 to see if the loop counter is equal to "3", namely that the steps ST-2 to ST-10 have been repeated three times. If not, the CPU 8 increases the count of the loop counter by "1" at a step ST-12 and returns to the step ST-2. If the answer at the step ST-11 is yes, then the mis-convergence value calculating program is carried out at a step ST-13 by retrieving the light intensity data stored in the memory 7 at the step ST-8 for each colour, and calculating the difference between the time points (positions) at which the peak values occur in the light intensity values for each colour, that is a mis-convergence value.

The display program is activated at a step ST-14 so as to display the mis-convergence value on the display section 13. It is to be noted that the display data can be displayed directly on the display screen 2 of the CRT 1 under test or a separate display means, such as an LCD for example, can be provided. Further, it is to be noted that, as mentioned above, the pattern generator 15 can shift both vertical and horizontal line patterns on the domain $S_1$ thus allowing measurement of both vertical and horizontal mis-convergence to be carried out.

Figure 14 shows a sub-routine of the "no measurement area changing program" step ST-4 of Figure 11. A step ST-20 checks whether the no measurement area is on the right side of the screen. If so, a step ST-21 sets the no measurement area on the left side of the screen. If not, a step ST-22 checks whether the no measurement area is on the left side of the screen. If so, a step ST-23 sets the no measurement area on the right side of the screen. If not, an error is registered.

Figure 15 shows a sub-routine of the "line interval control program" step ST-6 of Figure 11. A step ST-30 checks whether the modulation factor is less than 0.2. If so, a step ST-31 generates lines which have reduced interval spacing. If not, a gtep ST-32 checks whether the modulation factor is greater than 0.6. If so, a step ST-33 generates lines which have increased interval spacing.

During the above-described processes, since the total area of the luminescent lines is always equal to the area of the picture image of each of the two colours not being measured, the current values of the colours energised by the colour CRT are constant. Thus, no positional fluctuation is induced by high-voltage variations, allowing extremely accurate measurement to be carried out.

Although in the present embodiment a composite colour is cast in the domain $S_2$, the primary colours in the domain not to be measured can alternatively be cast separately, in discrete sections, or with a partial overlap, or any other arrangement such that the picture image of each colour is held equal. It will be additionally noted however that the total picture image of each colour need not be kept completely equal if falling in a range where no variation of high-voltage occurs in the colour CRT.

Thus, according to the present technique, by using a convergence measuring apparatus in which luminescent lines of primary colours are cast on the display screen of a CRT and the light intensity data for each colour is compared to determine a mis-convergence value, the display screen being divided into two domains with the current values of red, green and blue being substantially constant during measurement, it is possible to eliminate detrimental effects upon the frequency characteristics of the drive circuits or the like for red, blue and green in the colour CRT and upon the rise-up characteristic (low range frequency characteristic) of the cathode of the CRT.

## Claims

1. A convergence measurement apparatus for a colour cathode ray tube (1) having a display screen (2), the apparatus comprising:

   pattern generating means (15) for generating a pattern signal for display on the display screen (2) of the cathode ray tube (1);
   light sensing means (4) having a single peaked directional response for supplying a signal representative of input light received from the display screen (2); and
   mis-convergence calculating means (7 to 12) supplied with the signal from the light sensing means (4), for calculating a mis-convergence value;

   characterised in that:

   the pattern generating means (15) is operable to generate a pattern which includes a measuring area of a bar pattern of a selectable colour and a plane area of at least two colours not including the colour of the bar pattern;
   measuring means (5. 6) is supplied with the output signal of the light sensing means (4) for measuring the intensity of the light received by the light sensing means (4) and providing corresponding light intensity data;
   memory means (7) is provided for storing the light intensity data for a plurality of colours received by the light sensing means (4);
   the mis-convergence calculating means (7 to 12) is operable to calculate a modulation degree and a mis-convergence value based on the light intensity data for the plurality of colours, and includes setting means (11, 12) for setting the position of the bar pattern and the plane area on the display screen (2) such that, when the modulation degree of the light received by the light sensing means (4) is below a first predetermined value or above a second predetermined value, the setting means (11, 12) is operable to adjust the line interval of the bar patterns so as to bring the modulation degree within a range between the first and second predetermined values; and
display means (13) is provided for displaying the mis-convergence value determined by the mis-convergence calculating means (7 to 12).

2. A convergence measurement apparatus according to claim 1, wherein the setting means (11, 12) is responsive to the measuring means (5, 6) to determine if the modulation degree of the light intensity data is zero, and if so, the setting means (11, 12) is operable to change the relative positions on the display screen (2) of the measuring area and the plane area from the pattern generating means (15) such that the modulated light intensity is supplied to the light sensing means (4).

3. A convergence measurement apparatus according to claim 1 or claim 2, comprising inspection means (10) for selectively causing the pattern generating means (15). the measuring means (5, 6), the calculating means (8, 9) and the setting means (11, 12) to successively process light intensity data for a single colour and to compare light intensity data generated thereby to determine variations therein, and wherein the display means (13) is further operable to display data generated by the inspection means (10).

4. A convergence measurement apparatus according to claim 3, wherein the single colour is red.

5. A convergence measurement apparatus according to any one of the preceding claims, wherein the first predetermined modulation degree value is 0.2 and the second predetermined modulation degree value is 0.6.

6. A convergence measurement apparatus according to any one of the preceding claims, wherein the total area of the bars in the bar pattern is at least substantially equal to the area of each colour of the plane area.

7. A convergence measurement apparatus according to claim 6, wherein:

   the width of the plurality of bars = $(1/N) . S$;
   the width of a display area of the plurality of bars = $(N/(N+1)) . L$; and
   the width of the plane area is $(1/(N+1)) . L$;
   where N is a constant,
   S is the periodic length of the bars, and L is the width of the display screen (2) of the cathode ray tube (1) under test.

8. A convergence measurement apparatus according to any one of the preceding claims, wherein the colour of the plane area is a composite of the colours which are not currently displayed as a plurality of bars.

9. A convergence measurement apparatus according to any one of claims 1 to 7, wherein the colours comprising the plane area are discrete from one another.

**Patentansprüche**

1. Konvergenzmeßvorrichtung für eine Farbkathodenstrahlröhre (1) mit einem Anzeigebildschirm (2), wobei die Vorrichtung folgendes aufweist:

Mustererzeugungsmittel (15) zur Erzeugung eines Mustersignales zur Anzeige auf dem Anzeigebildschirm (2) der Kathodenstrahlröhre (1);
Lichterfassungsmittel (4) mit einem gerichteten Antwortsignal mit einem einzigen Spitzenwert zur Lieferung eines bezeichnenden Signales für das Eingangslicht, das von dem Anzeigebildschirm (2) empfangen wird; und
Nicht-Konvergenzberechnungsmittel (7-12), die mit dem Signal von den Lichterfassungsmitteln (4) beliefert werden zur Berechnung eines Nicht-Konvergenzwertes; dadurch gekennzeichnet, daß
das Mustererzeugungsmittel (15) funktionsfähig ist, um ein Muster zu erzeugen, das einen Meßbereich von einem Balkenmuster einer auswählbaren Farbe und einen ebenen Bereich von zumindest zwei Farben einschließt, die nicht die Farbe des Balkenmusters beinhalten;
Meßmittel (5, 6) beliefert werden mit dem Ausgangssignal des Lichterfassungsmittels (4) zur Messung der Intensität des Lichtes, das von dem Lichterfassungsmittel (4) empfangen wird, und Bereitstellung entsprechender Lichtintensitätsdaten;
Speichermittel (7) zur Speicherung der Lichtintensitätsdaten für eine Vielzahl von Farben bereitgestellt werden, die durch die Lichterfassungsmittel (4) empfangen werden;
das Nicht-Konvergenzberechnungsmittel (7-12) funktionsfähig ist, um einen Modulationsgrad und einen Nicht-Konvergenzwert zu berechnen, basierend auf den Lichtintensitätsdaten für die Vielzahl von Farben und daß sie Setzmittel (11, 12) beinhalten zum Setzen der Position des Balkenmusters und des ebenen Bereiches auf dem Anzeigebildschirm (2), so daß, wenn der Modulationsgrad des durch das Lichterfassungsmittel (4) empfangenen Lichtes niedriger ist als ein erster vorbestimmter Wert oder höher als ein zweiter vorbestimmter Wert, die Setzmittel (11, 12) funktionsfähig sind, um das Zeilenintervall der Balkenmuster derart anzupassen, um den Modulationsgrad in einen Bereich zwischen dem ersten und zweiten vorbestimmten Wert zu bringen; und
ein Anzeigemittel (13) bereitgestellt wird zur Anzeige des Nicht-Konvergenzwertes, der durch die Nicht-Konvergenzberechnungsmittel (7-12) bestimmt wurde.

2. Konvergenzmeßvorrichtung nach Anspruch 1, worin das Setzmittel (11, 12) auf die Meßmittel (5, 6) anspricht, um zu bestimmen, ob der Modulationsgrad der Lichtintensitätsdaten Null ist, und, wenn dem so ist, das Setzmittel (11, 12) funktionsfähig ist, um die relativen Lagen auf dem Anzeigebildschirm (2) des Meßbereiches und des ebenen Bereiches des Mustererzeugungsmittels (15) zu verändern, so daß die modulierte Lichtintensität an das Lichterfassungsmittel (4) geliefert wird.

3. Konvergenzmeßvorrichtung nach Anspruch 1 oder Anspruch 2, die Kontrollmittel (10) enthält zur selektiven Veranlassung des Mustererzeugungsmittels (15), des Meßmittels (5,6), des Berechnungsmittels (8, 9) und des Setzmittels (11,12) zur aufeinanderfolgenden Bearbeitung der Lichtintensitätsdaten für eine einzige Farbe und zum Vergleich von Lichtintensitätsdaten, die dadurch erzeugt werden, um Abweichungen darin zu bestimmen und worin das Anzeigemittel (13) weiterhin funktionsfähig ist, um durch das Kontrollmittel (10) erzeugte Daten anzuzeigen.

4. Konvergenzmeßvorrichtung nach Anspruch 3, worin die einzige Farbe Rot ist.

5. Konvergenzmeßvorrichtung nach einem der vorhergehenden Ansprüche, worin der erste vorbestimmte Wert des Modulationsgrades 0,2 ist und der zweite vorbestimmte Wert des Modulationsgrades 0,6 ist.

6. Konvergenzmeßvorrichtung nach einem der vorhergehenden Ansprüche, worin der gesamte Bereich der Balken in dem Balkenmuster zumindest annähernd gleich dem Bereich von jeder Farbe des ebenen Bereiches ist.

7. Konvergenzmeßvorrichtung nach Anspruch 6, worin:

die Breite der Vielzahl von Balken = $(1/N) \cdot S$;
die Breite des Anzeigebereiches der Vielzahl von Balken = $(N/(N+1)) \cdot L$; und
die Breite des ebenen Bereiches = $(1/(N+1)) \cdot L$; worin N eine Konstante ist, S ist die periodische Länge der Balken und L ist die Breite des

Anzeigebildschirmes (2) der Kathodenstrahlröhre (1) unter Testbedingungen.

8. Konvergenzmeßvorrichtung nach einem der vorhergehenden Ansprüche, worin die Farbe des ebenen Bereiches aus den Farben zusammengesetzt ist, die nicht laufend als eine Vielzahl von Balken angezeigt werden.

9. Konvergenzmeßvorrichtung nach einem der Ansprüche 1 - 7, worin die Farben, die den ebenen Bereich beinhalten, sich untereinander unterscheiden.

**Revendications**

1. Appareil de mesure de convergence pour un tube à rayons cathodiques couleur (1) ayant un écran d'affichage (2), l'appareil comprenant :

un moyen de génération de modèle (15) pour générer un signal de modèle pour un affichage sur l'écran d'affichage (2) du tube à rayons cathodiques (1) ;
un moyen de détection de lumière (4) ayant une réponse directionnelle à crête unique pour fournir un signal représentatif de la lumière d'entrée reçue à partir de l'écran d'affichage (2) ; et
un moyen de calcul d'inconvergence (7 à 12) reçoit le signal du moyen de détection de lumière (4), pour calculer une valeur d'inconvergence ;

caractérisé en ce que :

le moyen de génération de modèle (15) est utilisable pour générer un modèle qui comprend une zone de mesure d'un modèle de barre d'une couleur sélectionnable et d'une zone plane d'au moins deux couleurs ne comprenant pas la couleur du modèle de barre ;
un moyen de mesure (5, 6) reçoit le signal de sortie du moyen de détection de lumière (4) pour mesurer l'intensité de la lumière reçue par le moyen de détection de lumière (4) et pour fournir des données d'intensité lumineuse correspondantes ;
un moyen de mémoire (7) est prévu pour stocker les données d'intensité lumineuse pour une pluralité de couleurs reçues par le moyen de détection de lumière (4) ;
le moyen de calcul d'inconvergence (7 à 12) est utilisable pour calculer un degré de modulation et une valeur d'inconvergence sur la base des données d'intensité lumineuse pour la pluralité de couleurs, et comprend un moyen de réglage (11, 12) pour régler la position du modèle de barre et la zone plane sur l'écran d'affichage (2) pour que, lorsque le degré de modulation de la lumière reçue par le moyen de détection de lumière (4) est en dessous d'une première valeur prédéterminée ou au-dessus d'une seconde valeur prédéterminée, le moyen de réglage (11, 12) est utilisable pour régler l'intervalle de lignes des modèles de barre afin de mettre le degré de modulation dans un intervalle entre les première et seconde valeurs prédéterminées ; et
un moyen d'affichage (13) est prévu pour afficher la valeur d'inconvergence déterminée par le moyen de calcul d'inconvergence (7 à 12).

2. Appareil de mesure de convergence selon la revendication 1, dans lequel le moyen de réglage (11, 12) est sensible au moyen de mesure (5, 6) pour déterminer si le degré de modulation des données d'intensité lumineuse est zéro, et si oui, le moyen de réglage (11, 12) est utilisable pour changer les positions relatives sur l'écran d'affichage (2) de la zone de mesure et de la zone plane du moyen de génération de modèle (15) pour que l'intensité lumineuse modulée soit appliquée au moyen de détection de lumière (4).

3. Appareil de mesure de convergence selon la revendication 1 ou la revendication 2, comprenant un moyen de contrôle (10) pour provoquer sélectivement le traitement successif des données d'intensité lumineuse par le moyen de génération de modèle (15), le moyen de mesure (5, 6), le moyen de calcul (8, 9) et le moyen de réglage (11, 12) pour une couleur unique et pour comparer les données d'intensité lumineuse générées ainsi pour y déterminer des variations, et où le moyen d'affichage (13) est en outre utilisable pour afficher des données générées par le moyen de contrôle (10).

4. Appareil de mesure de convergence selon la revendication 3, dans lequel la couleur unique est rouge.

5. Appareil de mesure de convergence selon l'une quelconque des revendications précédentes, dans lequel la première valeur de degré de modulation prédéterminée est de 0,2 et la seconde valeur de degré de modulation prédéterminée est de 0,6.

6. Appareil de mesure de convergence selon l'une quelconque des revendications précédentes, dans lequel la zone totale des barres dans le modèle de barre est au moins substantiellement égale à la zone de chaque couleur de la zone plane.

7. Appareil de mesure de convergence selon la revendication 6, dans lequel :

la largeur de la pluralité de barres = $(1/N) \cdot S$ ;
la largeur de la zone d'affichage d'une pluralité de barres = $(N/(N+1)) \cdot L$ ; et
la largeur de la zone plane est $(1/(N+1)) \cdot L$ ; où N est une constante, S est la longueur périodique des barres, et L est la largeur de l'écran d'affichage (2) du tube à rayons cathodiques (1) sous test.

8.  Appareil de mesure de convergence selon l'une quelconque des revendications précédentes, dans lequel la couleur de la zone plane est un composite des couleurs qui ne sont pas actuellement affichées comme une pluralité de barres.

9.  Appareil de mesure de convergence selon l'une quelconque des revendications 1 à 7, dans lequel les couleurs comprenant la zone plane sont discrètes les unes des autres.

EP 0 421 750 B1

**FIG.1**

FIG.2

**FIG.3**

**FIG.4**

**FIG.5**

A B C D a b c d α

**FIG.6**

PEAK

**FIG.7**

**FIG.8**

## FIG.9

## FIG.10

**FIG.11**

COMPOSITE
COLOR

δ

2

4

S₂          S₁

## FIG.12

MIN

MAX

A B C D a b c d α

## FIG.13

FIG.14

FIG.15